# EUROPÄISCHE PATENTSCHRIFT

(11) **EP 1 268 229 B1**
(45) Veröffentlichungstag und Bekanntmachung des Hinweises auf die Patenterteilung: **15.10.2003**
(21) Anmeldenummer: 01917096.8
(22) Anmeldetag: 17.03.2001
(51) Int. Cl.: B60K 17/04, B60K 7/00, F16H 1/22

(54) **RADANTRIEB ZUM ANTRIEB EINES FAHRZEUGRADES**
WHEEL DRIVE FOR DRIVING A VEHICLE WHEEL
MOREDUCTEUR POUR L'ENTRAINEMENT D'UNE ROUE D'UN VEHICULE

(30) Priorität: 22.03.2000 DE 10014131
(43) Veröffentlichungstag der Anmeldung: 02.01.2003
(73) Patentinhaber: ZF FRIEDRICHSHAFEN Aktiengesellschaft, 88038 Friedrichshafen (DE)
(72) Erfinder: GAZYAKAN, Ünal, 88045 Friedrichshafen (DE); WENDL, Harald, 94474 Vilshofen (DE); ROSKE, Michael, 88046 Friedrichshafen (DE); BACHMANN, Max, 88339 Bad Baldsee (DE); BOCH, Peter, 88142 Wasserburg (DE)
(86) Internationale Anmeldenummer: EP0103077
(87) Internationale Veröffentlichungsnummer: WO01070534

(56) Entgegenhaltungen:
- EP-A- 0 523 472
- WO-A-01/03963
- DE-A- 3 640 947
- DE-A- 19 716 538
- US-A- 1 352 131
- US-A- 2 337 884

## Beschreibung

Die Erfindung betrifft einen Radantrieb zum Antrieb eines Fahrzeugrades mit Ritzel, Zwischenrad und Hohlrad wie in der US-A-1 352 131 offenbart.

Radantriebe zum Antrieb eines Fahrzeugrades werden unter anderem in Niederflur-Omnibussen verwendet, bei welchen jedes angetriebene Fahrzeugrad einen eigenen Antriebsmotor aufweist. Um eine genügend breite Gangbreite im Omnibus zu erreichen, ist es nötig, die axiale Erstreckung des Radantriebes möglichst gering zu halten.

In der WO-A-01/21427 (Stand der Technik nach art. 54 (3) EPC) wird ein Radantrieb zum Antrieb eines Fahrzeugrades offenbart, bei welchem ein exzentrisch zur Radachse angeordneter Antriebsmotor ein erstes Untersetzungsgetriebe antreibt, dessen Abtrieb ein Sonnenrad einer Planetenstufe antreibt, deren Abtrieb drehfest mit der Felge verbunden ist. Die Bremse, mit welcher das Fahrzeugrad bremsbar ist, ist innerhalb der Felge zwischen dem Antriebsmotor und der ersten Untersetzungsstufe angeordnet.

Die WO-A-01/03963 (Stand der Technik nach Art 54(3) EPC) offenbart eine Antriebsachse für Omnibusse, bei welcher ein exzentrisch zur Radachse angeordneter Antriebsmotor eine erste Untersetzungsstufe antreibt, deren Abtrieb über ein Planetengetriebe das Rad antreibt. Um einen möglichst großen Abstand zwischen der Radachse und dem Antriebsmotor zu erreichen, steht das Antriebsritzel des Untersetzungsgetriebes einerseits direkt und andererseits über Zwischenräder mit dem Hohlrad in kämmender Verbindung. Indem die direkt vom Antriebsritzel angetriebenen Zwischenräder ein weiteres Zwischenrad antreiben, welches mit dem Hohlrad in Verbindung steht, ist die radiale und axiale Erstreckung des Untersetzungsgetriebes abhängig von der übertragbaren Leistung des Zwischenrades, welches mit dem Hohlrad kämmt. Außerdem ist eine Lagerung des Hohlrades erforderlich.

Der vorliegenden Erfindung liegt die Aufgabe zugrunde, einen Radantrieb zum Antrieb eines Fahrzeugrades zu schafffen, welcher kompakt ausgeführt werden kann.

Die Aufgabe wird mit einem Radantrieb nach Anspruch 1 gelöst.

Erfindungsgemäß besteht der Radantrieb aus einem exzentrisch zur Radachse angeordneten Antriebsmotor, welcher in Form eines Elektro- oder Hydraulikmotors ausgeführt sein kann, und welcher ein Ritzel eines Untersetzungsgetriebes antreibt. Um den größtmöglichen Abstand zwischen Antriebsmotor und Radachse zu erreichen, steht das Ritzel in kämmender Verbindung mit dem Hohlrad. Um die Verzahnungsbelastung am Ritzel zu reduzieren, kämmt das Ritzel zusätzlich mit zwei Zwischenrädern und weist somit drei Zahneingriffe auf, über welche eine gleichmäßige Drehmomentverteilung am Ritzel entsteht. Indem das Ritzel einerseits mit dem Hohlrad und andererseits mit zwei Zwischenrädern im kämmender Verbindung steht, welche so angeordnet sind, daß die Verbindungslinien der Drehpunkte der Zwischenräder mit dem Drehpunkt des Ritzels jeweils 120° ergeben, wird keine Lagerung des Ritzels benötigt. Die Zwischenräder, welche mit dem Ritzel in kämmender Verbindung stehen, treiben je ein Zwischenrad an, welches jeweils mit dem Hohlrad in kämmender Verbindung steht. Somit erfolgt eine gleichmäßige Drehmomentabgabe an das Hohlrad. Die Verbindungslinie zwischen dem Drehpunkt des Zwischenrades, welches mit dem Hohlrad in kämmender Verbindung steht und seinem Zahneingriff mit dem Hohlrad, und die Verbindungslinie von demselben Drehpunkt des Zwischenrades zum Drehpunkt des Zwischenrades, welches mit dem Ritzel in kämmender Verbindung steht, bilden einen Winkel von 120°. Somit sind die drei Zahneingriffe am Hohlrad mit einer Teilung von 120° angeordnet, wodurch eine Lagerung des Hohlrades und des Ritzels entfallen kann. Die beiden Zwischenräder, welche mit dem Hohlrad in kämmender Verbindung stehen, sind so angeordnet, daß auf das Hohlrad kein Kippmoment aufgebracht wird. Hierzu ist bei einem der Zwischenräder eine über dessen Verzahnungsbreite mittig angeordnete Ausnehmung angebracht, innerhalb welcher das zweite Zwischenrad, welches mit dem Hohlrad in kämmender Verbindung steht, angeordnet ist. Indem die Verzahnung des einen Zwischenrades, welches mit dem Hohlrad in kämmender Verbindung steht, innerhalb der Ausnehmung des anderen Zwischenrades, welches mit dem Hohlrad in kämmender Verbindung steht, angeordnet ist und die Zahneingriffe am Hohlrad und am Ritzel gleichmäßig verteilt sind, wird ein sehr kompaktes Untersetzungsgetriebe geschaffen, welches in der Lage ist, ein hohes Drehmoment zu übertragen und ohne zusätzliche Lagerung des Ritzels und des Hohlrades auszukommen, da keinerlei Kippkräfte auf das Hohlrad wirken. Das vom Antriebsmotor angetriebene Untersetzungsgetriebe ist innerhalb der Radlagerung angeordnet, wodurch sich ein in axialer Richtung kompakter Radantrieb ergibt. Durch die radiale Kompaktheit des Untersetzungsgetriebes ist es möglich, eine Radlagerung geringeren Durchmessers zu verwenden. Zwischen dem Untersetzungsgetriebe und dem Antriebsmotor ist eine Bremse angeordnet. Durch den großen Abstand des Antriebsmotors zur Radachse kann die Bremse innerhalb des Felgendurchmessers angeordnet werden. Dem Untersetzungsgetriebe kann eine Planetenstufe nachgeschaltet angeordnet sein, es ist jedoch auch möglich, das Hohlrad des Untersetzungsgetriebes direkt als Antrieb des Rades zu verwenden.

Weitere Merkmale sind der Figuren-Beschreibung zu entnehmen.

Es zeigen:

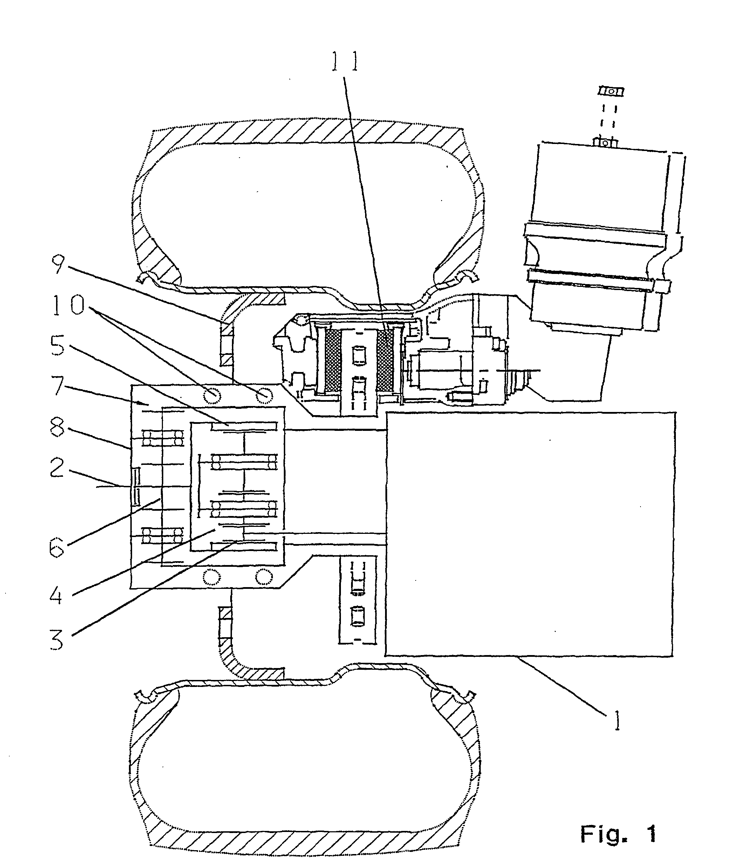

- Fig. 1: einen Radantrieb zum Antrieb eines Fahrzeugrades;

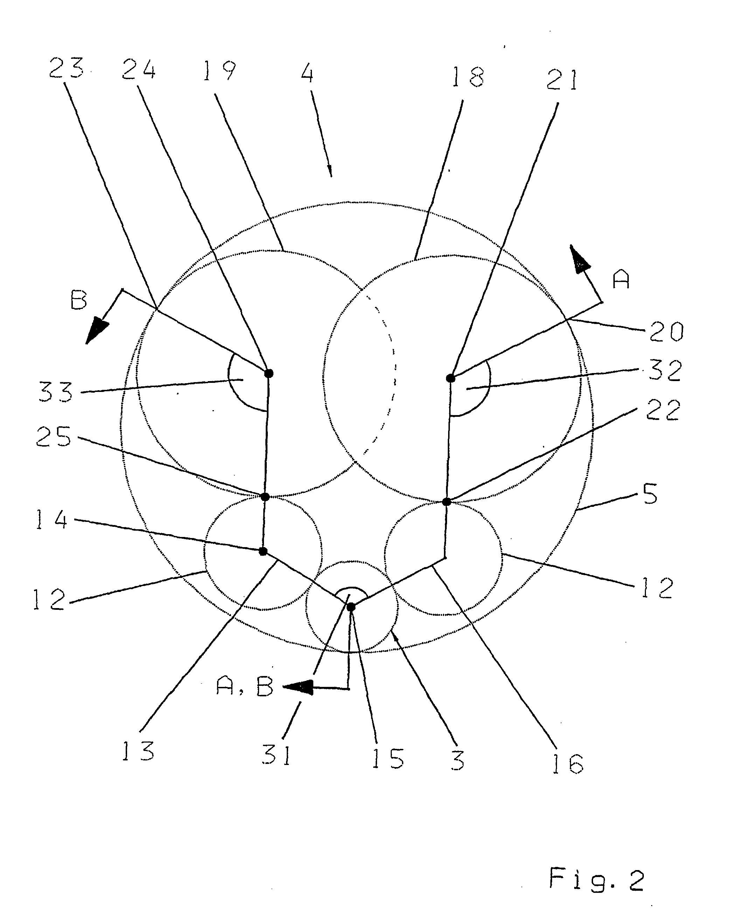

- Fig. 2: ein Schema des Untersetzungsgetriebes;
- Fig. 3: einen Schnitt A-A durch das Schema des Untersetzungsgetriebes und

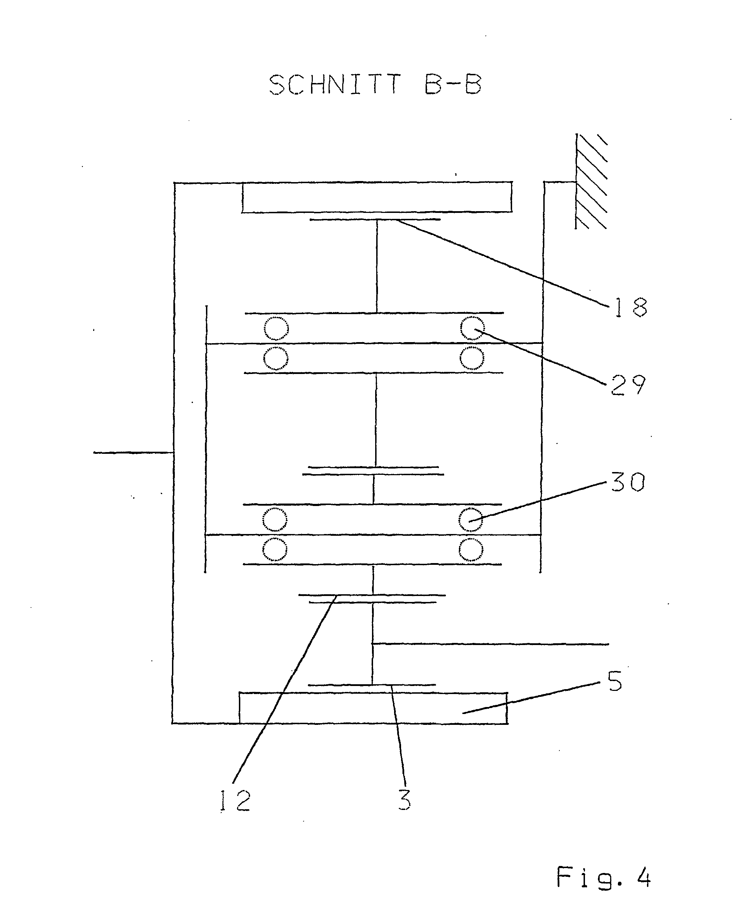

- Fig. 4: einen Schnitt B-B durch das Schema des Untersetzungsgetriebes.

### Fig. 1:

Ein Antriebsmotor 1 ist exzentrisch zur Radachse 2 angeordnet und treibt ein Ritzel 3 eines Untersetzungsgetriebes 4 an. Das Hohlrad 5 des Untersetzungsgetriebes 4 treibt ein inneres Zentralrad 6 einer Planetenstufe 7 an. Der Planetenträger 8 der Planetenstufe 7 ist drehfest mit einer Felge 9 verbunden. Über eine Radlagerung 10 ist die Felge 9 gelagert. Die Radlagerung 10 befindet sich radial außerhalb des Untersetzungsgetriebes 4. Eine Bremse 11 ist zwischen dem Untersetzungsgetriebe 4 und dem Antriebsmotor 1 innerhalb der Felge 9 angeordnet.

### Fig. 2:

Das Ritzel 3 des Untersetzungsgetriebes 4 treibt zwei Zwischenräder 12 an. Die Linie 13, welche vom Drehpunkt 14 des einen Zwischenrades 12 zum Drehpunkt 15 des Ritzels verläuft, und die Linie 16, welche vom Drehpunkt 15 zum Drehpunkt 17 verläuft, bilden einen Winkel 31 von 120°. Die beiden Zwischenräder 12 treiben die Zwischenräder 18 und 19 an, welche mit dem Hohlrad 5 in kämmender Verbindung stehen. Das Zwischenrad 19 überschneidet das Zwischenrad 18, wobei das Zwischenrad 19 im Bereich der Überschneidung innerhalb des Zwischenrades 18 angeordnet ist. Bei einer Anordnung des Zwischenrades 19 vor oder hinter dem Zwischenrad 18 würde ein Kippmoment auf das Hohlrad 5 erzeugt, welches extra abgelagert werden müßte. Die Linie vom Zahneingriff 20 zum Drehpunkt 21 und die Linie vom Drehpunkt 21 zum Zahneingriff 22 bilden einen Winkel 32 von 120°. Die Linie vom Zahneingriff 23 zum Drehpunkt 24 und die Linie vom Drehpunkt 24 zum Zahneingriff 25 bilden einen Winkel 33 von 120°. Somit ist gewährleistet, daß der Zahneingriff der Zwischenräder 18 und 19 und dem Ritzel 3 mit dem Hohlrad 5 gleichmäßig verteilt ist, wodurch das Ritzel 3 und das Hohlrad 5 keine Lagerung benötigen und somit fliegend angeordnet werden können.

### Fig. 3:

Das Ritzel 3 steht einerseits in kämmender Verbindung mit dem Hohlrad 5 und andererseits in kämmender Verbindung mit dem Zwischenrad 12. Das Zwischenrad 12 steht in kämmender Verbindung mit dem Zwischenrad 19, welches über seine Verzahnungsbreite eine Ausnehmung 26 aufweist, in welcher das nicht dargestellte Zwischenrad 18 angeordnet ist. Indem die Ausnehmung 26 mittig zur Verzahnungsbreite des Zwischenrades 19 angeordnet ist, werden auf das Hohlrad 5 keinerlei Kippkräfte aufgebracht. Das Zwischenrad 19 und das Zwischenrad 12 sind über eine Lagerung 27 und 28 ortsfest gelagert.

### Fig. 4:

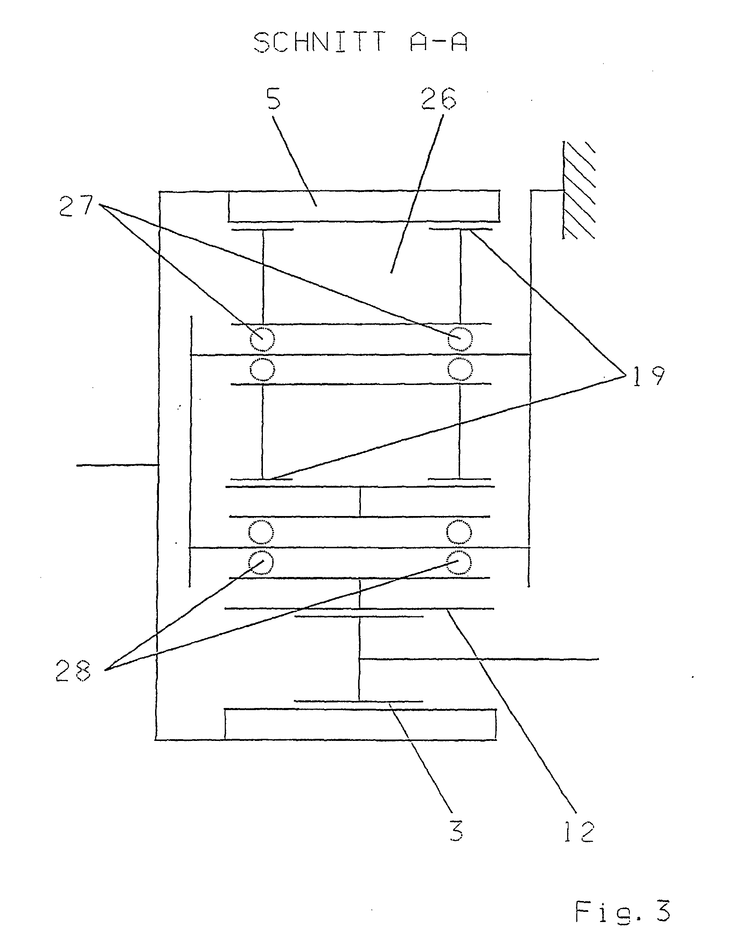

Das Ritzel 3 steht in kämmender Verbindung mit dem Hohlrad 5 und dem Zwischenrad 12. Das Zwischenrad 18 steht in kämmender Verbindung mit dem Hohlrad 5 und dem Zwischenrad 12. Die Breite der Verzahnung des Zwischenrades 18 ist so ausgeführt, daß das Zwischenrad 18 in die Ausnehmung 26 der Fig. 3 eingreifen kann. Das Zwischenrad 18 und das Zwischenrad 12 sind über eine Lagerung 29 und 30 ortsfest gehalten.

### Bezugszeichen

- 1: Antriebsmotor
- 2: Radachse
- 3: Ritzel
- 4: Untersetzungsgetriebe
- 5: Hohlrad
- 6: inneres Zentralrad
- 7: Planetenstufe
- 8: Planetenträger
- 9: Felge
- 10: Radlagerung
- 11: Bremse
- 12: Zwischenräder
- 13: Linie
- 14: Drehpunkt
- 15: Drehpunkt
- 16: Linie
- 17: Drehpunkt
- 18: Zwischenrad
- 19: Zwischenrad
- 20: Zahneingriff
- 21: Drehpunkt
- 22: Zahneingriff
- 23: Zahneingriff
- 24: Drehpunkt
- 25: Zahneingriff
- 26: Ausnehmung
- 27: Lagerung
- 28: Lagerung
- 29: Lagerung
- 30: Lagerung
- 31: Winkel
- 32: Winkel
- 33: Winkel

## Patentansprüche

1. Radantrieb zum Antrieb eines Fahrzeugrades mit einem exzentrisch zur Radachse (2) angeordneten Antriebsmotor (1), welcher ein Ritzel (3) eines Untersetzungsgetriebes (4) antreibt, welches einerseits mit einem Hohlrad (5) und andererseits mit zwei Zwischenrädern (12) in kämmender Verbindung steht, wobei das Hohlrad (5) den Abtrieb bildet und konzentrisch zu einer Radachse (2) angeordnet ist, wobei jedes Zwischenrad (12), welches mit dem Ritzel (3) in kämmender Verbindung steht, je ein Zwischenrad (18, 19) antreibt, welches mit dem Hohlrad (5) in kämmender Verbindung steht.

2. Radantrieb nach Anspruch 1, **dadurch gekennzeichnet, daß** die Zwischenräder (18, 19), welche mit dem Hohlrad (5) in kämmender Verbindung stehen, sich in ihrer radial äußeren Erstreckung gegenseitig überschneiden.

3. Radantrieb nach Anspruch 1, **dadurch gekennzeichnet, daß** eine Verbindungslinie zwischen einem Zahneingriff (20, 23) des Zwischenrades (18, 19) mit dem Hohlrad (5) und einem Drehpunkt (21, 24) dieses Zwischenrades (18, 19) mit einer Verbindungslinie des Drehpunktes (21, 24) dieses Zwischenrades (18, 19) und dem Drehpunkt (14) des Zwischenrades (12), welches mit dem Ritzel (3) in kämmender Verbindung steht, einen Winkel (32, 33) von nahezu 120° bildet.

4. Radantrieb nach Anspruch 1, **dadurch gekennzeichnet, daß** Verbindungslinien der Drehpunkte (14) der Zwischenrader (12), welche mit dem Ritzel (3) in kämmender Verbindung stehen, mit dem Drehpunkt (15) des Ritzels (3) einen Winkel (31) von nahezu 120° bilden.

5. Radantrieb nach Anspruch 1, **dadurch gekennzeichnet, daß** ein Zwischenrad (19), welches mit dem Hohlrad (5) in kämmender Verbindung steht, über dessen Verzahnungsbreite eine mittig angeordnete Ausnehmung (26) aufweist, und ein Zwischenrad (18) eine mittig angeordnete Verzahnung aufweist, dessen Breite so ausgeführt ist, daß die Verzahnung des einen Zwischenrades (18) in die Ausnehmung (26) des anderen Zwischenrades (19) eingreift.

6. Radantrieb nach Anspruch 1, **dadurch gekennzeichnet, daß** dem Untersetzungsgetriebe (4) eine Planetenstufe (7) nachgeschaltet angeordnet ist.

7. Radantrieb nach Anspruch 1, **dadurch gekennzeichnet, daß** eine Radlagerung (10) radial außerhalb des Untersetzungsgetriebes (4) angeordnet ist.

8. Radantrieb nach Anspruch 1, **dadurch gekennzeichnet, daß** eine Bremse (11) zwischen dem Antriebsmotor (1) und dem Untersetzungsgetriebe (4) angeordnet ist.

## Claims

1. The invention relates to a wheel drive of an automotive wheel, with the drive motor (1) arranged eccentrically in relation to the wheel axis (2) and driving a pinion (3) of a reduction gear (4), which meshes with a ring gear (5) and two intermediate gears (12), with the ring gear (5) forming the output and being arranged concentrically in relation to a wheel axis (2), with each intermediate gear (12), which meshes with the pinion (3), driving one intermediate gear (18, 19), which meshes with the ring gear (15).

2. Wheel drive according to claim 1, **characterized in that** the intermediate gears (18, 19) meshing with the ring gear (5) overlap each other at their outer radial extensions.

3. Wheel drive according to claim 1, **characterized in that** a connecting line between the meshing (20, 23) of the intermediate gear (18, 19) with the ring gear (5) and the rotation point (21, 24) of this intermediate gear (18, 19) forms an angle (32, 33) of almost 120° with a connecting line of the rotation point (21, 24) of this intermediate gear (18, 19) and the rotation point (14) of the intermediate gear (12) meshing with the pinion (3)

4. Wheel drive according to claim 1, **characterized in that** the connecting lines of the rotation points (14) of the intermediate gears (12) meshing with the pinion (3) form an angle (31) of almost 120° with the rotation point (15) of the pinion (3).

5. Wheel drive according to claim 1, **characterized in that** an intermediate gear (19), which meshes with the ring gear (5), is provided with a centrally located recess (26) on its gear width, and that an intermediate gear (18) is provided with a centrally located gearing, whose width is such that the gearing of the intermediate gear (18) engages with the recess (26) of the other intermediate gear (19).

6. Wheel drive according to claim 1, **characterized in that** the reduction gear (4) has a secondary planetary stage (7).

7. Wheel drive according to claim 1, **characterized in that** a wheel bearing (10) is arranged radially outside the reduction gear (4).

8. Wheel drive according to claim 1, **characterized in that** a brake (11) is arranged between the drive motor (1) and the reduction gear (4).

## Revendications

1. Entraînement de roue pour l'entraînement d'une roue de véhicule, comprenant un moteur d'entraînement (1) disposé excentriquement par rapport à l'axe (2) de la roue, qui entraîne un pignon (3) d'un mécanisme réducteur (4), lequel est en liaison par engrènement, d'une part avec une couronne à denture intérieure (5) et, d'autre part, avec deux roues intermédiaires (12), la couronne à denture intérieure (5) formant l'organe de sortie et étant disposée concentriquement à un axe (2) de la roue, dans lequel chaque roue intermédiaire (12), qui est en liaison par engrènement avec le pignon (3), entraîne respectivement une roue intermédiaire (18, 19) qui est en liaison par engrènement avec la couronne à denture intérieure (5).

2. Entraînement de roue selon la revendication 1, **caractérisé en ce que** les roues intermédiaires (18, 19), qui sont en liaison par engrènement avec la couronne à denture intérieure (5), se chevauchent mutuellement par leur extension radialement extérieure.

3. Entraînement de roue selon la revendication 1, **caractérisé en ce qu'**une ligne de jonction entre un point d'engrènement (20, 23) de la roue intermédiaire (18, 19) avec la couronne à denture intérieure (5) et un centre de rotation (21, 24) de cette roue intermédiaire (18, 19) forme un angle (32, 33) d'environ 120° avec une ligne de jonction entre le centre de rotation (21, 24) de cette roue intermédiaire (18, 19) et le centre de rotation (14) de la roue intermédiaire (12) qui est en liaison par engrènement avec le pignon (3).

4. Entraînement de roue selon la revendication 1, **caractérisé en ce que** les lignes de jonction entre les centres de rotation (14) des roues intermédiaires (12) qui sont en liaison par engrènement avec le pignon (3) et le centre de rotation (15) du pignon (3) forment un angle (31) d'environ 120°.

5. Entraînement de roue selon la revendication 1, **caractérisé en ce qu'**une roue intermédiaire (19), qui est en liaison par engrènement avec la couronne à denture intérieure (5), comporte sur sa largeur de denture un évidement (26) placé au centre, et une roue intermédiaire (18) comporte une denture disposée au centre dont la largeur est calculée de manière que la denture de la roue intermédiaire (18) s'engage dans l'évidement (26) de l'autre roue intermédiaire (19).

6. Entraînement de roue selon la revendication 1, **caractérisé en ce qu'**un étage épicycloïdal (7) est disposé en aval du mécanisme réducteur (4).

7. Entraînement de roue selon la revendication 1, **caractérisé en ce qu'**un palier de roue (10) est disposé radialement à l'extérieur du mécanisme réducteur (4).

8. Entraînement de roue selon la revendication 1, **caractérisé en ce qu'**un frein (11) est disposé entre le moteur d'entraînement (1) et le mécanisme réducteur (4).
